# EUROPEAN PATENT SPECIFICATION

(11) **EP 2 430 953 B1**
(45) Date of publication and mention of the grant of the patent: **03.04.2013**
(21) Application number: 10425301.8
(22) Date of filing: 17.09.2010
(51) Int. Cl.: A47J 31/06, A47J 31/36, A47J 31/44

(54) **Device for preparing espresso coffee by means of a measure of loose ground coffee or a measure of ground coffee contained in a capsule with predetermined breaking**
Vorrichtung zur Zubereitung von Espresso-Kaffee mittels eines Maßes an losem gemahlenem Kaffee oder eines Maßes an gemahlenem Kaffee in einer Kapsel mit vorbestimmtem Bruch
Dispositif de préparation de café espresso au moyen d'une mesure de café moulu ou une mesure de café moulu contenu dans une capsule avec une coupure prédéterminée

(43) Date of publication of application: 21.03.2012
(73) Proprietor: Gruppo Cimbali S.p.A., 20082 Binasco (MI) (IT)
(72) Inventor: Maver, Marino, 20082 Binasco (MI) (IT)
(74) Representative: Perani, Aurelio

(56) References cited:
- EP-A1- 1 774 879
- WO-A1-2010/026529
- DE-A1-102007 038 699
- DE-U1-202004 008 637

## Description

The present invention relates to a device for preparing espresso coffee by means of a measure of loose ground coffee or a measure of ground coffee contained in a capsule which is provided with at least one breaking zone comprising at least one dispensing group, into which pressurized hot water flows, having a perforated disk for distributing the pressurized hot water, a filter holder which can be connected to and disconnected from the dispensing group via engagement means, the filter holder being provided with a recess having a circular cross-section which is axially open towards the dispensing group, to/from which it can be connected and disconnected, and a bottom having a channel which is outwardly open for dispensing the drink when it is prepared, a filter container which is suitable for being received in the recess of the filter holder when the coffee is prepared from a measure of loose ground coffee positioned in the filter container, and for being removed from the filter holder when the coffee is prepared from a measure of ground coffee contained in a capsule.

Recently, it has become increasingly widespread for espresso coffee to be dispensed using measures of ground coffee prepackaged in capsules of the type, for example, described in EP-A-0057671.

The reasons for which those capsules are becoming increasingly popular involve the good storage-life of the ground coffee from the time when the capsules are individually sealed in an airtight manner and, over time, they have been improved with structural arrangements which optimize the extraction of the drink through predetermined opening zones.

By using such capsules, even a person without the experience of a professional bar-tender is capable of preparing a good creamy espresso coffee.

During the development of such capsules, producers have independently acted so that, although they may appear at first sight generally similar, the capsules are instead characterized by different dimensions and functionalities which prevent use in machines having extraction chamber dimensions dedicated to the particular type of capsule.

In the case of manual or domestic machines, therefore, it has become apparent that it is necessary to adapt them to receive capsules of a different type from that originally intended during the design phase of the machine as, for example, set out in EP-A-0041931 or in EP-A-2090204.

In EP-A-1774879 an infusion machine for espresso coffee is described, in which use of pressed coffee powder (ground coffee) or coffee in pre-packaged paper pod or coffee in a disposable filter or in a coffee cartridge is required. In the machine, a supplying group is arranged to receive hot water under pressure and comprises a head unit with an upper head and a lower head. The upper head has a single configuration independent of the coffee packaging type used in the machine, whereas the lower head is configurable so as to have various shapes depending on the coffee packaging type.

Since the capsules allow the inclusion not only of mixtures of coffee of different quality, for example, decaffeinated, but also of mixtures comprising flavours such as, for example, ginseng or cardamom, their use is also beginning to be appreciated in professional applications in public establishments.

An object of the present invention is to solve the problem of how to make the professional machines for preparing coffee, conventionally designed to operate with loose measures of ground coffee, suitable for also operating with capsules containing one or more measures of coffee, aromatized or not.

The object is achieved with a device which is characterized in accordance with appended claim 1 which is incorporated herein by reference.

The invention will now be described in greater detail with reference to a preferred embodiment thereof which is illustrated by way of non-limiting example with reference to the appended drawings, in which:
- Figure 1 is a partially sectioned schematic view of a filter holder which is provided with a filter container for preparing coffee by means of measures of loose ground coffee;
- Figure 2 is a schematic perspective view of the internal wall of a dispensing group of a coffee machine showing the perforated disk according to the invention;
- Figure 3 is a partially sectioned side view of a capsule carrying body according to the invention;
- Figure 4 is a schematic perspective view of the capsule carrying body of Figure 3;
- Figure 5 is a sectional view of a capsule which contains one or more measures of ground coffee and which is suitable for being used in the capsule carrying body of Figure 3;
- Figure 6 is a view of the upper side of the capsule of Figure 5;
- Figure 7 is a view of the lower side of the same capsule as Figures 5 and 6;
- Figure 8 is a partially sectioned schematic view of a filter holder inserted in a capsule carrying body provided with a capsule, illustrated in the position in which it is connected to a dispensing group;
- Figure 9 is a sectional view, drawn to an enlarged scale, of the lower portion of the capsule carrying body inserted in the filter holder of Figure 8.

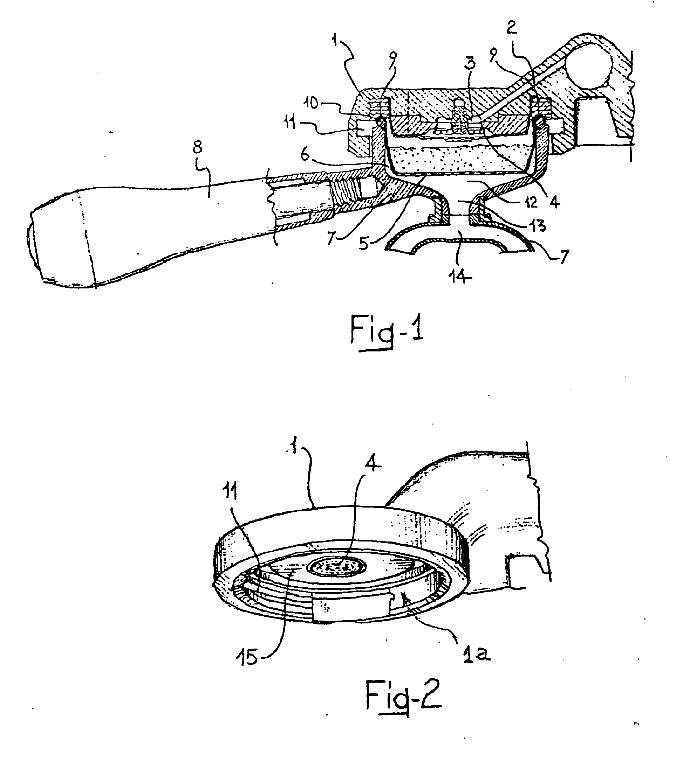

With reference to the above-mentioned Figures and in particular Figure 1, there is generally designated 1 the body of a dispensing group of a machine for preparing espresso coffee of the professional type in conventional use in public bars and cafés. In conventional manner, there flows to the dispensing group hot water, which is usually at a temperature between 80°C and 90°C and under pressure, by means of a pipe, whose end portion directed towards the dispenser is designated 2.

The body 1 of the dispenser comprises a disk which is designated 3, a dispenser for the pressurized hot water, and a perforated disk 4 for distributing the water to the measure of ground coffee, this being contained in the filter container 5 which is in turn positioned in the recess 6 of a filter holder 7, having a hand-grip 8 which is removable relative to the body 1 of the dispensing group.

The filter container 5 is provided with a folded edge 9, with which it engages in a releasable manner with the edge 10 of the filter holder 7.

The connection of the filter holder 7 with respect to the body 1 of the dispensing group is brought about by conventional engagement means, for example, bayonet type means, whose portion relative to the body 1 has been designated 11.

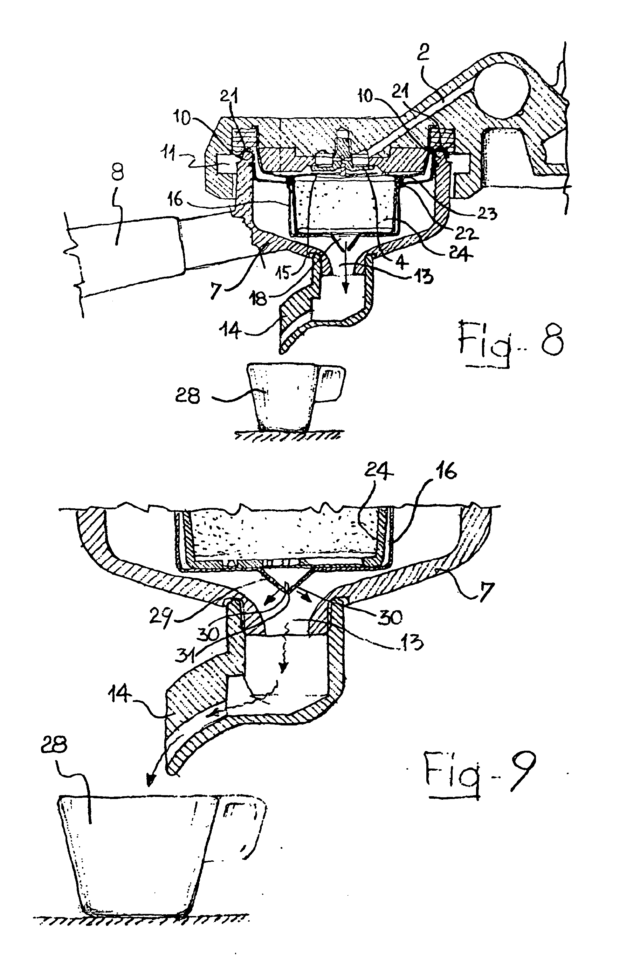

The recess 6 which has a circular cross-section is open in the upper portion thereof directed towards the dispensing group, to which it is connected, and is provided at the bottom 12 with a channel 13 for dispensing the drink. The dispensing channel 13 terminates in a conventional dispensing opening 14 which can be provided with outlets for two receiving cups, as shown in Figure 1, or an outlet for a single cup, as shown in Figures 8 and 9. With reference to Figure 2, which is a perspective schematic view of the hollow internal portion 1a of circular cross-section of the body 1 of the dispensing group, it is apparent that the perforated disk 4 does not occupy the entire diametral extent of the body 1 but instead is restricted to a central portion and is surrounded by an annular zone 15 which has a smooth surface without any holes, whose functionality will be able to be appreciated from the remainder of the description.

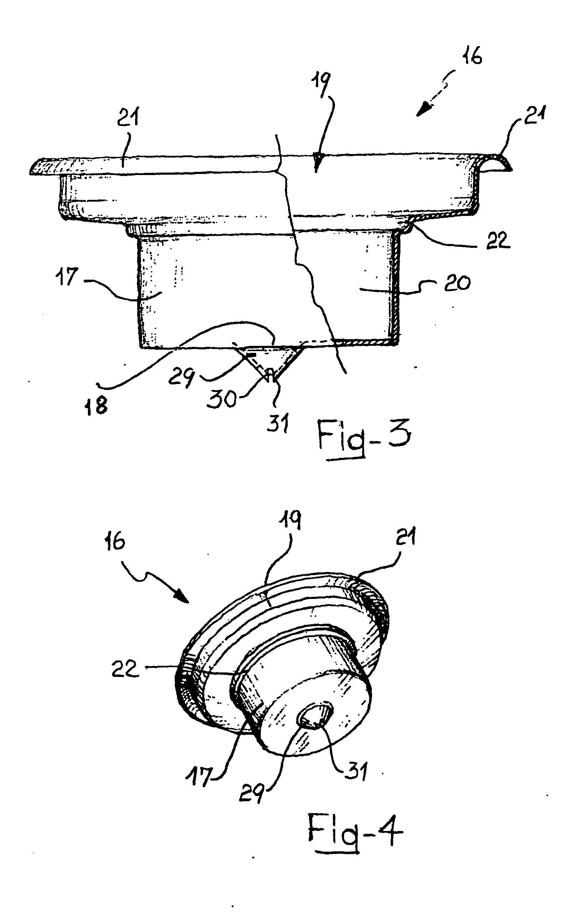

With reference to Figures 3 and 4, there is generally designated 16 the capsule carrying body according to the present invention. It comprises a cylindrical portion 17 which has a circular cross-section and a dispensing hole 18 which is positioned at the bottom, and an open upper portion 19, via which it is possible to insert a capsule which is received in the recess 20 which is internal with respect to the body 16.

The body 16 is provided with an edge 21 which allows engagement with the edge 10 of the filter holder 7 when the filter container 5 is removed from the filter holder 7 and replaced with the capsule carrying body 16.

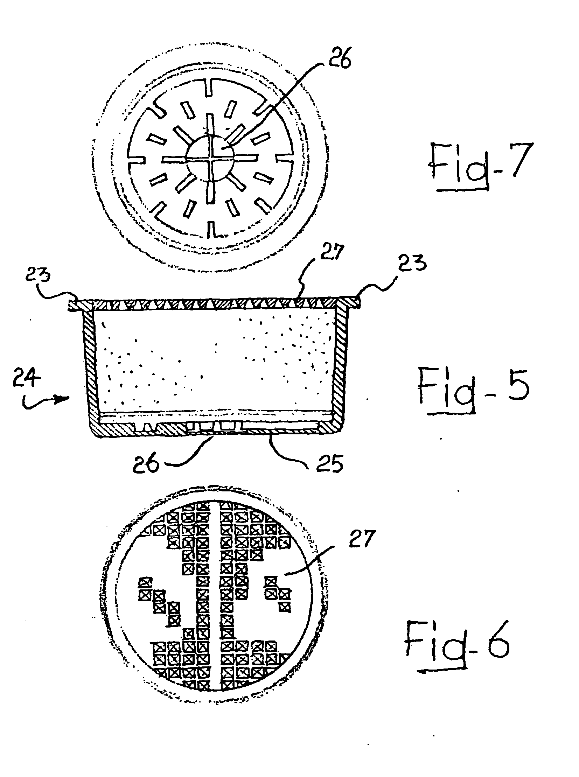

The same capsule carrying body 16 is provided with an edge 22 which extends around the opening of the cylindrical recess 17 and which is intended to receive the peripheral edge 23 of a capsule 24 for the purposes of achieving sealing against the annular zone 15, without any holes, of the perforated disk 4. With reference to Figures 5, 6 and 7, which illustrate a preferred type of capsule to be used with the device according to the invention, it will be appreciated that the capsule 24, in addition to having the peripheral edge 23 for sealing, is provided with a bottom 25 having a predetermined breaking zone 26 and an upper closure wall 27.

With reference to Figure 8, it can be seen that, in the case of dispensing coffee from a measure, whether a single measure or multiple measure, contained in a capsule, there is inserted in place of the filter container 5 in the filter holder 7 a capsule carrying body 16 which engages the folded edge 21 thereof with the edge 10 of the filter holder.

The capsule 24, whose edge 23 is supported on the edge 22 of the body 16, is positioned inside the cylindrical recess of the body 16.

When the filter holder as illustrated in Figure 8 is connected to the body 1 of the dispensing group, there is brought about sealing between the annular zone 15, which is smooth and does not have any holes, of the perforated disk 4 and the peripheral edge 23 of the capsule which is urged against the edge 22 of the capsule carrying body 16.

The dispensing opening 18 is further in axial alignment with the channel 13 of the filter holder 7. Under those sealing conditions, the pressurized hot water can be dispensed by means of the pipe 2 and distributed against the upper wall 27 of the capsule at the perforated portion of the perforated disk until the predetermined breaking zone 26 breaks and the drink flows from the capsule and is conveyed by the hole 18 into the channel 13 of the filter holder 7 and therefrom into a receiving cup, such as the one designated 28 in Figure 8.

When the capsule 24 is subjected to the force of the pressure of the hot water from the pipe 2 and the pressure inside the filter holder increases until the predetermined value for breaking the zone 26 is reached, during the breaking operation there is produced in the region of the hole 18 a small explosion which projects a jet of coffee towards the dispensing opening 14. As a result, the dispensing of the coffee starts with a spurt which tends to dirty the cup 28, often also spilling outside the cup. The disadvantage is prevented with a preferred construction of the capsule carrying body 16, wherein the dispensing opening 18 is provided with a tubular extension 29 which is preferably of conical form. Holes 30 which are arranged radially and which converge towards the vertex 31 are formed in the wall of the tubular extension.

The initial jet of coffee, being drawn through the holes 30, is projected against the walls of the channel 13 in the zone in which it is connected to the opening 14 and, travelling along the walls, falls by gravity into the cup 28, sliding without turbulence.

## Claims

1. A device for preparing espresso coffee by means of a measure of loose ground coffee or a measure of ground coffee contained in a capsule (24) which is provided with a sealing edge (23) and at least one predetermined breaking zone (26), comprising at least one dispensing group (1), into which pressurized hot water flows, the dispensing group being provided with a recess (1a) which has a circular cross-section and which is axially open at one side and is provided at the bottom with a perforated disk (4) for distributing the pressurized hot water, a filter holder (7) which can be connected to and disconnected from the recess (1a) of the dispensing group via engagement means (11), the filter holder (7) being provided with a recess (6) having a circular cross-section which is axially open towards the dispensing group (1), to/from which it can be connected and disconnected, and a bottom (12) having a channel (13) which is outwardly open for dispensing the drink when it is prepared, a filter container (5) which is suitable for being received in the recess (6) of the filter holder (7) when the coffee is prepared from a measure of loose ground coffee positioned in the filter container (5) and for being removed from the filter holder (7) when the coffee is prepared from a measure of ground coffee contained in a capsule (24), wherein the perforated disk (4) for distributing the pressurized hot water extends radially in the bottom of the recess (1a) of the dispensing group (1) with an annular zone (15) which is not provided with holes and which faces the recess (6) of the filter holder (7) in the region of the circular contour thereof, **characterized in that**:
the width of that annular zone (15) is capable of constituting an axial sealing support with respect to the edge (23) of the capsule (24) when it is inserted in the filter holder (7) in place of the filter container (5),
the device further includes a capsule carrying body (16) comprising a cylindrical portion (17) which has a circular cross-section, a dispensing hole (18) which is positioned at the bottom, and an open upper portion (19), through which it is possible to insert a capsule (24) which is received in a cylindrical recess (20) internal with respect to the body, and
the dispensing opening (18) is positioned at the bottom of the cylindrical recess (20) of the capsule carrying body (16) and it is provided with a tubular extension (29) which terminates in a closed end which is provided with through-holes (30).

2. The device for preparing espresso coffee according to claim 1, wherein the capsule carrying body (16) is capable of being inserted in the recess (6) of the filter holder (7) in place of the filter container (5) when the coffee is prepared from a measure of ground coffee contained in a capsule (24), and the cylindrical recess (20) has a circular cross-section which is axially open at the side directed towards the dispensing group (1), in order to contain a capsule (24), the cylindrical recess (20) being provided with an edge (22) for abutting the edge (23) of the capsule (24) and the dispensing opening (18) positioned at the bottom, the abutment edge (22) axially facing the annular zone (15), which is not provided with holes, of the perforated disk (4) when the capsule carrying body (16) is inserted in the filter holder (7) in place of the filter container (5).

3. The device according to claims 1 or 2, **characterized in that** the tubular extension (29) is of conical form and the through-holes (30) are formed in the wall of the cone and converge towards the vertex (31).

4. The device according to any one of claims 1 to 3, **characterized in that** the dispensing opening (18) positioned at the bottom of the recess (20) of the capsule carrying body (16) is formed in such a position as to be in axial alignment with the channel (13) of the bottom of the recess (6) of the filter holder (7) when the capsule carrying body (16) is inserted in the filter holder (7).

## Patentansprüche

1. Vorrichtung zum Zubereiten von Espresso mittels einer Menge an losem, gemahlenen Kaffee oder einer Menge an gemahlenem Kaffee, die in einer Kapsel (24) enthalten ist, die mit einem Dichtungsrand (23) und wenigstens einer vorbestimmten Bruchzone (26) versehen ist, umfassend wenigstens
eine Abgabegruppe (1), in welche unter Druck stehendes heißes Wasser fließt,
wobei die Abgabegruppe mit einer Ausnehmung (1a), die einen kreisförmigen Querschnitt aufweist und die an einer Seite axial geöffnet ist und am Boden mit einer perforierten Scheibe (4) zum Verteilen des unter Druck stehenden heißen Wassers versehen ist, einem Filterhalter (7), der mit der Ausnehmung (1a) der Abgabegruppe über Eingriffsmittel (11) verbunden bzw. von dieser getrennt werden kann, wobei der Filterhalter (7) mit einer Ausnehmung (6), die einen kreisförmigen Querschnitt aufweist, versehen ist, die axial in Richtung der Abgabegruppe (1) geöffnet ist, mit der er verbunden bzw. von der er getrennt werden kann, und einem Boden (12) versehen ist, der einen Kanal (13) aufweist, der zum Abgeben des Getränks, wenn es zubereitet wird, nach außen geöffnet ist,
einen Filterbehälter (5), der dazu geeignet ist, in der Ausnehmung (6) des Filterhalters (7) aufgenommen zu werden, wenn der Kaffee aus einer Menge an losem, gemahlenen Kaffee, die in dem Filterbehälter (5) angeordnet ist, zubereitet wird, und aus dem Filterhalter (7) entfernt zu werden, wenn der Kaffee aus einer Menge an gemahlenem Kaffee, die in einer Kapsel (24) enthalten ist, zubereitet wird,
wobei sich die perforierte Scheibe (4) zum Verteilen des unter Druck stehenden heißen Wassers in dem Boden der Ausnehmung (1a) der Abgabegruppe (1) radial mit einer ringförmigen Zone (15) erstreckt, die nicht mit Löchern versehen ist und die der Ausnehmung (6) des Filterhalters (7) in dem Bereich von deren kreisförmigen Kontur zugewandt ist, **dadurch gekennzeichnet, daß**
die Breite der ringförmigen Zone (15) dazu geeignet ist, einen axialen Dichtungsträger in Bezug zu dem Rand (23) der Kapsel (24) zu bilden, wenn sie in den Filterhalter (7) an Stelle des Filterbehälters (5) eingesetzt wird,
die Vorrichtung ferner einen Kapseltragkörper (16) umfaßt, der einen zylindrischen Abschnitt (17) umfaßt, der einen kreisförmigen Querschnitt aufweist, eine Abgabeöffnung (18), die an dem Boden angeordnet ist, und einen offenen oberen Abschnitt (19), durch welchen es möglich ist, eine Kapsel (24) einzusetzen, die in einer in Bezug auf den Körper inneren zylindrischen Ausnehmung (20) aufgenommen wird, und
die Abgabeöffnung (18) am Boden der zylindrischen Ausnehmung (20) des Kapseltragkörpers (16) angeordnet und mit einer röhrenförmigen Verlängerung (29) versehen ist, die in einem geschlossenen Ende endet, das mit Durchgangsöffnungen (30) versehen ist.

2. Vorrichtung zum Zubereiten von Espresso nach Anspruch 1, wobei der Kapseltragkörper (16) dazu fähig ist, in die Ausnehmung (6) des Filterhalters (7) an Stelle des Filterbehälters (5) eingesetzt zu werden, wenn der Kaffee aus einer Menge an gemahlenem Kaffee, die in einer Kapsel (24) enthalten ist, zubereitet wird, und die zylindrische Ausnehmung (20) einen kreisförmigen Querschnitt aufweist, der an der Seite, die in Richtung der Abgabegruppe (1) gerichtet ist, axial geöffnet ist, um eine Kapsel (24) aufzunehmen, wobei die zylindrische Ausnehmung (20) mit einem Rand (22) zum Anliegen an dem Rand (23) der Kapsel (24) versehen ist, und die Abgabeöffnung (18) am Boden angeordnet ist, wobei der Anliegerand (22) der ringförmigen Zone (15), die nicht mit Öffnungen versehen ist, der perforierten Scheibe (4) axial zugewandt ist, wenn der Kapseltragkörper (16) in den Filterhalter (7) an Stelle des Filterbehälters (5) eingesetzt ist.

3. Vorrichtung nach den Ansprüchen 1 oder 2, **dadurch gekennzeichnet, daß** die röhrenförmige Verlängerung (29) eine konische Form aufweist und die Durchgangsöffnungen (30) in der Wand des Konus ausgebildet sind und in Richtung des Scheitelpunktes (31) konvergieren.

4. Vorrichtung nach einem der Ansprüche 1 bis 3, **dadurch gekennzeichnet, daß** die Abgabeöffnung (18), die an dem Boden der Ausnehmung (20) des Kapseltragkörpers (16) angeordnet ist, in einer derartigen Position ausgebildet ist, daß sie mit dem Kanal (13) des Bodens der Ausnehmung (6) des Filterhalters (7) axial ausgerichtet ist, wenn der Kapseltragkörper (16) in den Filterhalter (7) eingesetzt ist.

## Revendications

1. Dispositif de préparation de café espresso au moyen d'une quantité de café moulu en vrac ou d'une quantité de café moulu contenue dans une capsule (24) qui est pourvue d'une arête d'étanchéité (23) et d'au moins une zone de rupture (26) prédéterminée, comprenant au moins
un group distributeur (1) dans lequel s'écoule de l'eau chaude sous pression, ledit group distributeur étant pourvu d'une cavité (1a) qui présente une section transversale circulaire et qui est ouverte axialement sur un côté et est pourvue au fond d'un disque perforé (4) pour distribuer l'eau chaude sous pression, d'un porte-filtre (7) qui peut être relié à et détaché de ladite cavité (1a) dudit groupe distributeur par le biais de moyens d'engagement (11), ledit porte-filtre (7) étant pourvu d'une cavité (6) ayant une section transversale circulaire qui est ouverte axialement en direction du groupe distributeur (1) auquel/duquel il peut être relié et détaché, et d'un fond (12) ayant un canal (13) qui est ouvert vers l'extérieur pour distribuer la boisson lorsqu'elle est préparée,
un contenant de filtre (5) qui est susceptible d'être reçu dans ladite cavité (6) du porte-filtre (7) lorsque le café est préparé à partir d'une quantité de café moulu en vrac positionnée dans le contenant de filtre (5) et d'être enlevé du porte-filtre (7) lorsque le café est préparé à partir d'une quantité de café moulu contenue dans une capsule (24),
dans lequel le disque perforé (4) pour distribuer l'eau chaude sous pression s'étend radialement dans le fond de la cavité (1a) du groupe distributeur (1) avec une zone annulaire (15) qui n'est pas pourvue de trous et qui montre en direction de la cavité (6) du porte-filtre (7) au niveau du contour circulaire de celle-ci, **caractérisé par le fait que**
la largeur de la zone annulaire (15) est apte à constituer un support axial d'étanchéité par rapport à ladite arête (23) de la capsule (24) lorsque celle-ci est insérée dans le porte-filtre (7) à la place du contenant de filtre (5),
le dispositif comprend en outre un corps de support de capsule (16) comprenant une portion cylindrique (17) qui présente une section transversale circulaire, une ouverture de distribution (18) qui est située au fond ainsi qu'une portion supérieure ouverte (19) par laquelle une capsule (24) est apte à être insérée qui est reçue dans une cavité cylindrique (20) intérieure par rapport audit corps, et
ladite ouverture de distribution (18) est située au fond de la cavité cylindrique (20) du corps de support de capsule (16) et est pourvue d'une extension tubulaire (29) qui se termine en une extrémité fermée qui est pourvue de trous traversants (30).

2. Dispositif de préparation de café espresso selon la revendication 1, dans lequel ledit corps de support de capsule (16) est apte à être inséré dans ladite cavité (6) du porte-filtre (7) à la place du contenant de filtre (5) lorsque le café est préparé à partir d'une quantité de café moulu contenue dans une capsule (24), et ladite cavité cylindrique (20) présente une section transversale circulaire qui est ouverte axialement sur le côté dirigé vers le groupe distributeur (1) afin de contenir une capsule (24), la cavité cylindrique (20) étant pourvue d'une arête (22) pour venir en appui contre l'arête (23) de ladite capsule (24) et ladite ouverture de distribution (18) étant positionnée au fond, ladite arête d'appui (22) montrant axialement en direction de la zone annulaire (15) non pas pourvue de trous, du disque perforé (4) lorsque le corps de support de capsule (16) est inséré dans le porte-filtre (7) à la place du contenant de filtre (5).

3. Dispositif selon les revendications 1 ou 2, **caractérisé par le fait que** ladite extension tubulaire (29) présente une forme conique et les trous traversants (30) sont ménagés dans la paroi du cône et convergent vers le sommet (31).

4. Dispositif selon l'une quelconque des revendications 1 à 3, **caractérisé par le fait que** ladite ouverture de distribution (18) positionnée au fond de la cavité (20) du corps de support de capsule (16) est formée dans une position telle qu'elle est alignée axialement avec ledit canal (13) du fond de la cavité (6) du port-filtre (7) lorsque le corps de support de capsule (16) est inséré dans le porte-filtre (7).
